# EUROPÄISCHE PATENTSCHRIFT

(11) **EP 3 096 893 B1**
(45) Veröffentlichungstag und Bekanntmachung des Hinweises auf die Patenterteilung: **24.02.2021**
(21) Anmeldenummer: 15701494.5
(22) Anmeldetag: 15.01.2015
(51) Int. Cl.: B06B 3/00

(54) **KONVERTEREINHEIT**
CONVERTER UNIT
UNITÉ DE CONVERSION

(30) Priorität: 24.01.2014 DE 102014100817
(43) Veröffentlichungstag der Anmeldung: 30.11.2016
(73) Patentinhaber: Herrmann Ultraschalltechnik GmbH & Co. Kg, 76307 Karlsbad (DE)
(72) Erfinder: GMEINER, Josef, 92729 Weiherhammer (DE); FAUSTKA, Thorsten, 76359 Marxzell (DE); VOGLER, Ulrich, 88690 Uhldingen-Mühlhof (DE)
(74) Vertreter: WSL Patentanwälte Partnerschaft mbB
(86) Internationale Anmeldenummer: PCT/EP2015/050690
(87) Internationale Veröffentlichungsnummer: WO 2015/110347

(56) Entgegenhaltungen:
- EP-A2- 1 514 670
- DE-A1- 1 810 406
- JP-A- H1 187 437
- JP-A- H06 153 546
- US-A- 4 500 272

## Beschreibung

Die vorliegende Erfindung betrifft eine Konvertereinheit sowie eine Ultraschallschwingeinheit mit einer solchen Konvertereinheit.

Insbesondere in der Verpackungstechnik gewinnt die Ultraschallbearbeitung von Materialien eine immer größer werdende Bedeutung.

So ist beispielsweise aus der EP 1 514 670 A2 eine Vorrichtung zum kontinuierlichen Verbinden und/oder Verfestigen von Materialbahnen mittels Ultraschall bekannt, bei der eine als rotierende Walze ausgebildete Sonotrode an einem radial gegenüberliegendem Gegenwerkzeug angeordnet ist, bei der Materialbahnen zum kontinuierlichen Verfestigen und/oder Verbinden zwischen der Sonotrode und dem Gegenwerkzeug hindurchgeführt werden. Die Sonotrode wird mit Hilfe eines über ein Amplitudentransformationsstück axial angesetzten Ultraschallkonverter mit einer Ultraschallschwingung angeregt. Der Ultraschallkonverter, der in der Regel entsprechende Piezoelemente aufweist, wandelt eine elektrische Wechselspannung in eine mechanische Schwingung um. Die Ultraschallschwingeinheit bestehend aus Sonotrode, Amplitudentransformationsstück und Konverter sind so aufeinander abgestimmt, dass, wenn der Ultraschallkonverter mit einer Wechselspannung mit der Eigenfrequenz der Sonotrode versorgt wird, eine Resonanzschwingung angeregt wird.

Werden beispielsweise zwei Materialbahnen gleichzeitig zwischen Sonotrode und Gegenwerkzeug hindurchbewegt und die Sonotrode mit einer vorgegebenen Kraft auf das Gegenwerkzeug gedrückt, so wird die Ultraschallschwingung auf die Materialbahnen übertragen und es kommt im Bereich der Grenzfläche zwischen den Materialbahnen zu einer lokalen Erwärmung und gegebenenfalls Verschweißung der Materialbahnen.

Durch die Ultraschallbearbeitung ist sichergestellt, dass Energie im Wesentlichen nur in den Bereich eingebracht wird, der für die Verbindung bzw. Verschweißung erwärmt werden muss. Demzufolge kann mittels der Ultraschallbearbeitung eine sehr energiesparende Materialbearbeitung erfolgen.

Daher besteht der Bedarf an immer leistungsfähigeren Ultraschallverarbeitungseinrichtungen. Zu diesem Zweck werden die eingangs beschriebenen als rotierende Walze ausgebildeten Sonotroden immer größer ausgebildet und die Materialbahngeschwindigkeit wird immer weiter erhöht. Zudem sollen immer dickere Materialbahnen mittels Ultraschall verschweißt werden. Dies hat jedoch zur Folge, dass die Sonotrode eine immer größere Leistung übertragen muss. Um dies zu bewerkstelligen muss die Schweißkraft, d.h die Kraft mit der die Sonotrode auf die Materialbahn gedrückt wird, erhöht werden, was wiederum zu einer erhöhten Schwingungsdämpfung und damit zu einer Reduzierung der Schwingungsamplitude führt.

Um die Schwingungsamplitude der Sonotrode trotz erhöhter Dämpfung konstant zu halten, kann beispielsweise die Wechselspannungsamplitude und/oder die Wechselstromamplitude am Konverter erhöht werden. Allerdings ist dies nur bis zu einem gewissen Maße möglich, da Piezoelemente eine maximale Ausdehnung bei einer Grenzspannung zeigen. Zudem zeigen Piezoelemente bei hohen Spannungen und/oder Strömen höhere elektrische Verluste.

Eine weitere Maßnahme um die mechanische Schwingungsamplitude bei höherer Schweißkraft konstant zu halten, kann die Verwendung einer größeren Anzahl von Piezoscheiben sein. Allerdings haben die Piezoscheiben eine endliche Ausdehnung und ihre Positionierung innerhalb des Ultraschallschwinggebildes kann nur innerhalb eines relativ engen Bereiches in der Nähe eines Schwingungsmaximums der stehenden Welle erfolgen.

Es ist daher auch schon versucht worden, mehrere Konverter, die jeweils einen Piezostapel aufweisen, mit einer Sonotrode zu verbinden. Allerdings ist hier ein hoher regelungstechnischer Aufwand notwendig, um die beiden Konverter geeignet zu synchronisieren.

In der DE 18 10 406 ist bereits eine Vorrichtung zum Verteilen von Schwingungsenergie beschrieben, die mehrere Übertragungselemente aufweist, die in im Wesentlichen rechtwinkliger Beziehung miteinander verbunden sind. An den Endflächen einiger Elemente sind Wandler angeordnet, die die Übertragungselemente anregen. Die Entwicklung und Herstellung solcher Übertragungselemente ist jedoch aufwändig. Darüber hinaus werden durch die relative große Ausdehnung der Vorrichtung in Querrichtung und insbesondere die Anordnung der Wandler in relativ großem Abstand zur Längsachse zusätzliche Schwingungsmoden erzeugt. Diese zusätzlichen Schwingungsmoden sind im wesentlichen unerwünschte Biegemoden, die jedoch im Betrieb mitangeregt werden und daher zu einer höheren mechanischen Belastung der Wandler sowie einer unerwünschten Erwärmung und damit zu einem erhöhten Energieverlust im System führen, sodass sich solche Ubertragungselemente nicht durchgesetzt haben

Aus der JPH06153546 ist eine Konvertereinheit mit einem Ultraschallübertragungselement bekannt, die zwei Ultraschallwandler aufweist, welche innerhalb eines Bereiches von halber Wellenlänge um die Längsachse des Ultraschallübertragungselements angeordnet sind.

Ausgehend von dem beschriebenen Stand der Technik ist es daher Aufgabe der vorliegenden Erfindung, eine Konvertereinheit mit einem Ultraschallübertragungselement bereitzustellen, das eine Übertragungsfläche zum Übertragen einer Ultraschallschwingung auf ein an der Übertragungsfläche befestigbares Werkzeug oder auf ein mit dieser in Kontakt stehendes Material In Längsrichtung entlang einer Längsachse des Ultraschallübertragungselement und mindestens einen Ultraschallwandler zum Erzeugen einer Ultraschallschwingung mit einer Ausbreitungssrichtung aufweist, welche nicht entlang der Längsrichtung ausgerichtet ist, wobei die Konvertereinheit eine Ultraschalleigenfrequenz aufweist, mit der eine hohe Schwingungsenergie erzeugt werden kann.

Erfindungsgemäß wird diese Aufgabe dadurch gelöst, dass der Ultraschallwandler in der Ausbreitungsrichtung in einem Bereich innerhalb von ± λ/4 um die Längsachse des Ultraschallübertragungselement angeordnet ist, wobei λ die Wellenlänge der zur Ultraschalleigenfrequenz gehörenden Schwingung ist.

Wenn in der vorliegenden Anmeldung von einer Ultraschalleigenfrequenz eines Elementes die Rede ist, ist damit die niedrigste Eigenfrequenz dieses Elementes gemeint, die einer longitudinalen Schwingung in Längsrichtung entspricht.

Mit anderen Worten nützt die erfindungsgemäße Konvertereinheit aus, dass die sich innerhalb der Ultraschallschwingeinheit ausbildende Schwingungsstruktur einen Längsschwingungsanteil, der für die Anregung der Sonotrode verwendet wird, und einen Querschwingungsanteil aufweist. Der Konverter wird daher nicht zur Erzeugung der eigentlich gewünschten Längsschwingung genutzt, sondern zur Erzeugung der eher unerwünschten, aber unvermeidlichen Querschwingung. Im Resonanzfall bildet sich daher sowohl in Längsrichtung als auch in Querrichtung eine stehende Longitudinalwelle aus. Während dies in Längsrichtung im Wesentlichen eine ebene Longitudinalwelle ist, bildet sich in Querrichtung im Wesentlichen eine Zylinderwelle aus.

Die Konvertereinheit ist dann derart ausgebildet, dass der Ultraschallwandler in der Ausbreitungsrichtung in einem Bereich innerhalb der zentralen Resonanzhalbwelle von λ/2 angeordnet ist. Dabei ist der Ultraschallwandler nicht auf der Längsachse, sondern von dieser beabstandet angeordnet.

Dabei ist vorzugsweise der Ultraschallwandler derart angeordnet, dass sich Ausbreitungsrichtung und Längsachse in einem Punkt schneiden, der sowohl für die Längs- als auch für die Querschwingung im Wesentlichen in einem Schwingungsknoten liegt.

Besonders bevorzugt ist eine Ausführungsform, bei der mindestens zwei Ultraschallwandler vorgesehen sind, die derart angeordnet sind, dass die von den mindestens zwei Ultraschallwandlern erzeugten Ultraschallwellen jeweils eine Ausbreitungsrichtung haben, die nicht parallel zur Längsrichtung ist, wobei vorzugsweise die mindestens zwei Ultraschallwandler jeweils in ihrer Ausbreitungsrichtung in einem Bereich innerhalb von ± λ/4 um die Längsachse des Ultraschallübertragungselement angeordnet sind.

Dabei verläuft die Ausbreitungsrichtung mit Vorteil senkrecht zur Längsrichtung. Grundsätzlich ist es zwar möglich, den Ultraschallwandler derart anzuordnen, dass er eine Ultraschallwelle erzeugt, die nicht senkrecht zur Längsrichtung verläuft. Dies führt jedoch in der Regel zu einer nicht optimalen Resonanzschwingung in der Konvertereinheit. Daher ist eine senkrechte Anordnung von Vorteil. Durch die Verwendung von mindestens zwei Ultraschallwandlern, die möglichst achsensymmetrisch zur Längsachse angeordnet sind, kann die Querwelle gleichmäßig angeregt werden, die aufgrund der Materialeigenschaften zu der gewünschten Längsschwingung führt.

In einer bevorzugten Ausführungsform ist eine gerade Anzahl von Ultraschallwandlern vorgesehen, wobei immer zwei Ultraschallwandler auf gegenüberliegenden Seiten der Längsachse angeordnet sind. Mit Vorteil sind vier Ultraschallwandler vorgesehen, die in Umfangsrichtung um jeweils 90° voneinander beabstandet sind.

Dabei ist es von Vorteil, wenn die Konvertereinheit in der Ausbreitungsrichtung eine Querausdehnung von etwa λ/2 hat.

In einer bevorzugten Ausführungsform weist die Konvertereinheit einen im Wesentlichen würfelförmigen Basisabschnitt und mindestens einen sich in Längsrichtung erstreckenden Längsarm sowie vier sich in Querrichtung erstreckende Querarme auf, wobei der mindestens eine Längsarm und die Querarme am Basisabschnitt befestigt sind, wobei die Querarme jeweils einen Ultraschallwandler aufweisen. Besonders bevorzugt sind zwei sich in Längsrichtung erstreckende Längsarme vorgesehen. An einem der Längsarme kann dann die anzuregende Sonotrode befestigt werden.

In einer weiteren bevorzugten Ausführungsform hat die Konvertereinheit sowohl in Querrichtung als auch in Längsrichtung eine Länge von etwa λ/2.

Beispielsweise kann der würfelförmige Basisabschnitt in Querrichtung eine Gewindebohrung aufweisen, an der der Ultraschallwandler angeschraubt werden kann. Allerdings kann es insbesondere bei höheren Schwingungsamplituden im Bereich der Gewindebohrung zu erheblichen Spannungen im Material kommen, wodurch die Schraubverbindung stark beansprucht und sogar beschädigt werden kann. In einer besonders bevorzugten Ausführungsform ist daher vorgesehen, dass das Ultraschallübertragungselement, d. h. beispielsweise der würfelförmige Basisabschnitt zumindest einen einstückig angeformten Haltestift aufweist, der durch eine Öffnung des Ultraschallerzeugers greift. Durch die einstückige Verbindung ist eine Ermüdung oder Beschädigung einer geschraubten Verbindung ausgeschlossen.

Die vorliegende Erfindung betrifft ebenso eine Ultraschallschwingeinheit mit einer drehbaren Sonotrode, die vorzugsweise als rotierende Walze ausgebildet ist. Um eine solche Sonotrode anzuregen, ist erfindungsgemäß vorgesehen, dass die beschriebene Konvertereinheit axial, gegebenenfalls über ein oder mehrere Amplitudentransformationsstücke, an die drehbare Sonotrode angesetzt ist. Die Verwendung von mehreren Amplitudentransformationsstücken ist beispielsweise in der WO 2007/079796 beschrieben.

Falls die zu übertragende Ultraschallenergie nicht ausreichen sollte, ist es auch möglich, zwei der beschriebenen Konvertereinheiten axial anzusetzen, wobei vorzugsweise die beiden Konvertereinheiten auf gegenüberliegenden Seiten der Sonotrode angesetzt sind.

Weitere Vorteile, Merkmale und Anwendungsmöglichkeiten der vorliegenden Erfindung werden deutlich anhand der folgenden Beschreibung einiger Ausführungsformen sowie der zugehörigen Figuren. Es zeigen:
Figur 1 eine perspektivische Ansicht auf eine erste erfindungsgemäße Konvertereinheit,
Figur 2 eine Draufsicht in Längsrichtung der Konvertereinheit von Figur 1,
Figur 3 eine Längsschnittansicht der Konvertereinheit von Figur 1,
Figur 4 eine perspektivische Ansicht des Ultraschallübertragungselement der Ausführungsform der Figur 1,
Figur 5 eine perspektivische Ansicht auf eine zweite erfindungsgemäße Konvertereinheit,
Figur 6 eine Draufsicht in Längsrichtung der Konvertereinheit von Figur 5,
Figur 7 eine Längsschnittansicht der Konvertereinheit von Figur 5,
Figur 8 eine perspektivische Ansicht des Ultraschallübertragungselement der Ausführungsform der Figur 5,
Figur 9 eine Draufsicht auf eine erste erfindungsgemäße Ausführungsform einer Ultraschallschwingeinheit,
Figur 10 eine perspektivische Ansicht der Ausführungsform von Figur 9,
Figur 11 eine Draufsicht auf eine zweite Ausführungsform einer erfindungsgemäßen Ultraschallschwingeinheit und
Figur 12 eine perspektivische Ansicht der Ausführungsform von Figur 11.

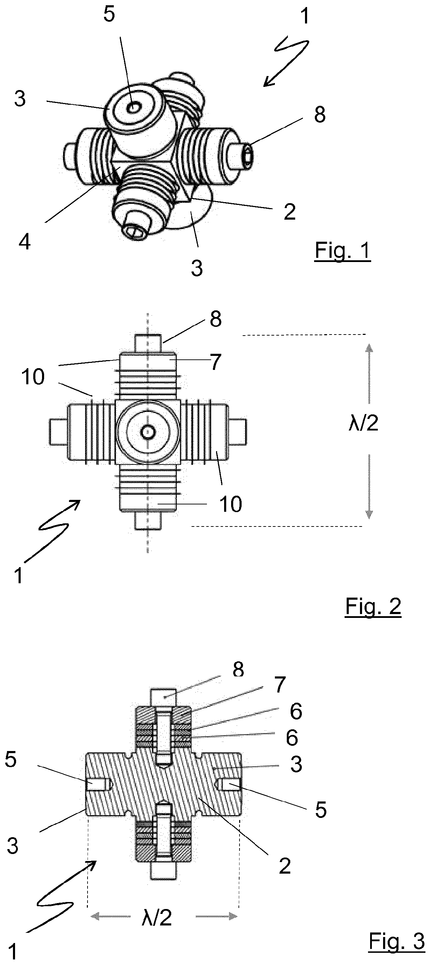

In den Figuren 1 bis 3 sind verschiedene Ansichten einer erfindungsgemäßen Konvertereinheit 1 gezeigt. Die Konvertereinheit 1 weist ein ultraschallübertragendes Element 2 auf, welches aus einem würfelförmigen Basisabschnitt 4 und zwei sich in Längsrichtung erstreckenden Armen 3 besteht. Die sich in Längsrichtung erstreckenden Arme 3 sind zylinderförmig ausgestaltet und weisen jeweils in ihren Stirnflächen Gewindebohrungen 5 auf, die zur Befestigung von Werkzeugen, wie zum Beispiel einer Sonotrode, dienen. Das ultraschallübertragende Element 2 soll zumindest an der Stirnfläche, an der das anzuregende Werkzeug befestigt wird, mit einer Ultraschalllängsschwingung beaufschlagt werden. Im Resonanzfall bildet sich daher an den Stirnflächen ein Schwingungsmaximum aus, während sich im Mittelpunkt des Ultraschallübertragungselementes 2 ein Schwingungsknoten der Längsschwingung ausbildet.

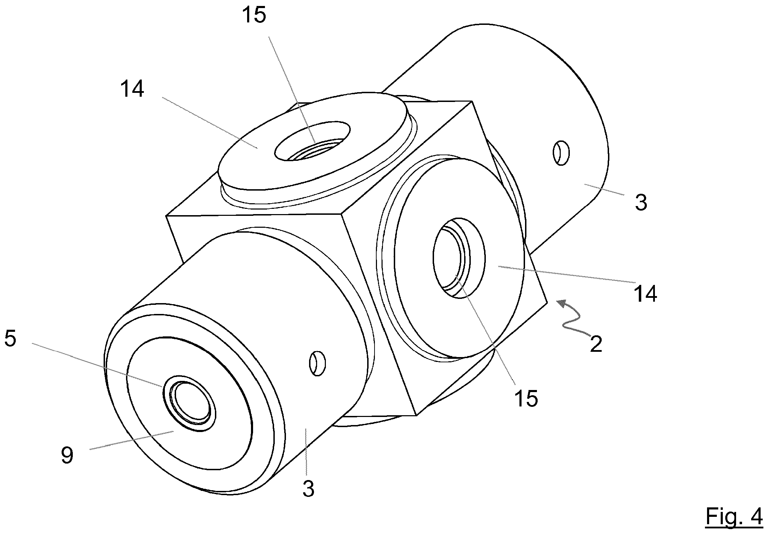

In Figur 4 ist eine perspektivische Ansicht des Ultraschallübertragungselementes 2 dargestellt. Zu erkennen sind die beiden sich von einem würfelförmigen Grundkörper erstreckenden Längsarme 3, von denen eine die Übertragungsfläche 9 sowie eine Gewindebohrung 5 zur Befestigung an einer Sonotrode oder einem Amplitudentransformator aufweist. Einstückig angeformt an den würfelförmigen Grundkörper sind vier Anlageflächen 14 für Ultraschallwandler, in die jeweils eine Gewindebohrung 15 eingelassen ist, in die die Schrauben 8 zur Befestigung der Piezoscheiben 6 eingreifen können.

Auch wenn in der Regel lediglich die Längsschwingung von Interesse ist, ist es inhärente Eigenschaft jedes Schwingungselementes, dass mit der Längsschwingung eine sich im Wesentlichen senkrecht hierzu erstreckende Querschwingung verknüpft ist.

Diese Verknüpfung wird erfindungsgemäß ausgenutzt. Das Ultraschallübertragungselement 2 weist zu diesem Zweck vier Ultraschallwandler 10 auf, die jeweils Piezoscheiben 6, eine Endscheibe 7 und eine Befestigungsschraube 8 umfassen. Die Piezoscheiben 6 sind zusammen mit einer Endscheibe 7 mit Hilfe von Befestigungsschrauben 8 an den in Querrichtung ausgerichteten Flächen des würfelförmigen Basisabschnittes 4 des ultraschallübertragenden Elementes 2 befestigt.

Mit Hilfe der Ultraschallwandler 10 kann somit eine Querschwingung in der Konvertereinheit erzeugt werden. Dabei ist die Konvertereinheit so bemessen, dass sich im Resonanzfall eine stehende Querwelle ausbildet, die im Wesentlichen auf der Längsachse im Mittelpunkt der Konvertereinheit einen Schwingungsknoten ausbildet, während sich an den Stirnflächen der in Querrichtung ausgerichteten Armen ein Schwingungsmaximum ausbildet. Wie in Figur 2 zu erkennen ist, hat daher die Konvertereinheit in Querrichtung eine Ausdehnung von λ/2, wobei λ die Wellenlänge der Querresonanzschwingung ist.

So wie eine Längsschwingung inhärent mit einer eigentlich unerwünschten Querschwingung verknüpft ist, führt auch die Erzeugung einer Querschwingung zu einer Längsschwingung, was erfindungsgemäß ausgenutzt wird.

Obgleich also alle Konverterelemente 10 zusammen eine Zylinderwelle in Querrichtung erzeugen, wird in dem ultraschallübertragenden Element 2 eine ebene Längsschwingung erzeugt. Aufgrund der Anordnung der Ultraschallwandler in einem Bereich innerhalb der zentralen Resonanzhalbwelle von λ/2 wird zudem der Energieverlust aufgrund der Anregung der Querschwingung minimiert.

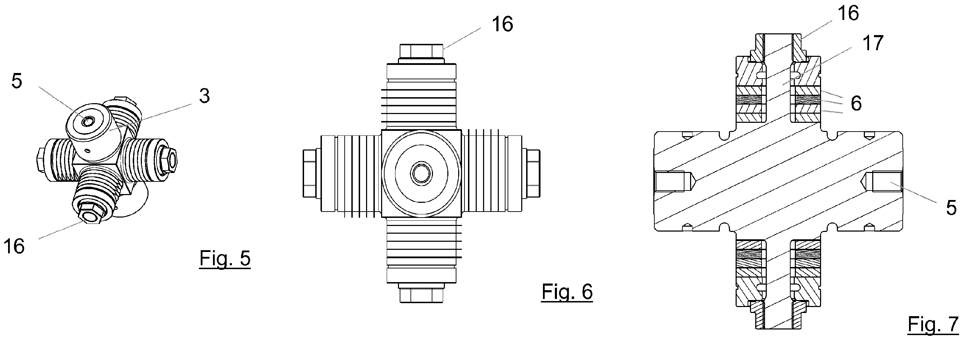

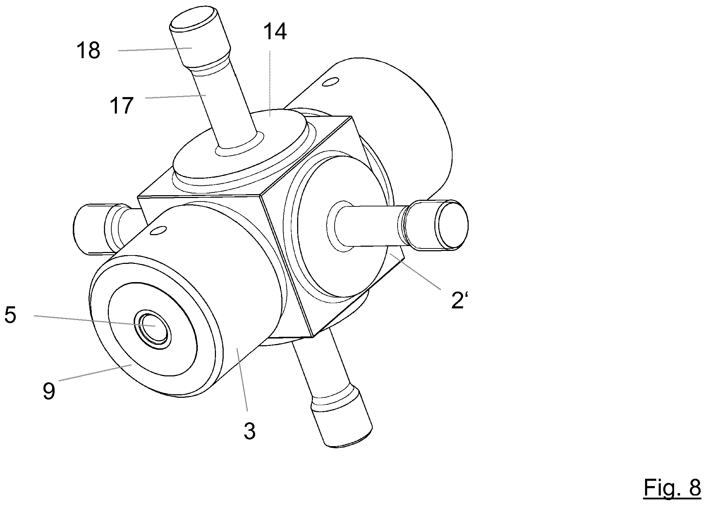

In den Figuren 5 bis 7 sind verschiedene Ansichten einer zweiten Ausführungsform einer erfindungsgemäßen Konvertereinheit gezeigt. Figur 8 zeigt einer perspektivische Ansicht des Ultraschallübertragungselementes 2' der zweiten Ausführungsform.

Die zweite Ausführungsform unterscheidet sich von der ersten Ausführungsform lediglich dadurch, dass zur Befestigung der Piezoscheiben 6 am Ultraschallübertragungselement 2' einstückig am Ultraschallübertragungselement 2' angeformte Haltestifte 17, welche einen Abschnitt mit einem Außengewinde 18 aufweisen, verwendet werden. Die Piezoscheiben 6 werden über die Haltestifte 17 geschoben und mit Hilfe einer Befestigungsmutter 16 am Ultraschallübertragungselement 2' befestigt. Durch die einstückige Verbindung zwischen Haltestiften 17 einerseits und Ultraschallübertragungselement 2' wird eine geschraubte Verbindung vermieden. Insbesondere bei hohen Schwingungsamplituden ist die Materialspannung in den Bereichen, an denene die Haltestifte mit dem Ultraschallübertragungselement 2' verbunden sind, sehr groß, was im Falle von geschraubten Verbindungen zu einer hohen Beanspruchung der Schraubverbindung führen kann.

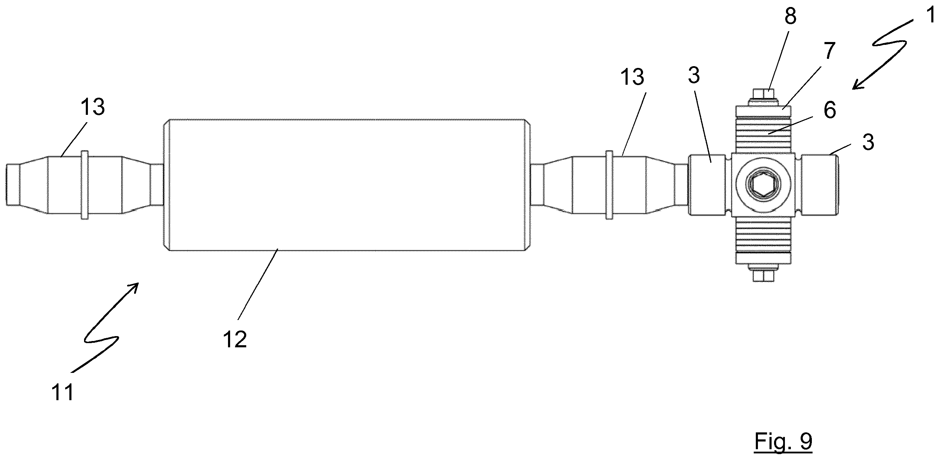

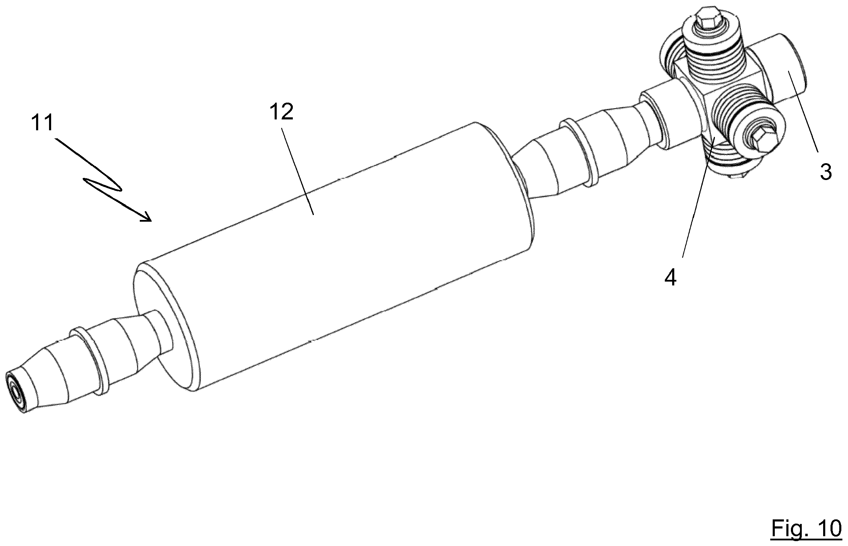

In den Figuren 9 und 10 sind zwei Ansichten eines ersten Ausführungsform einer erfindungsgemäßen Ultraschallschwingeinheit 11 gezeigt. Diese besteht aus einer Sonotrode 12, 13, die einen walzenförmigen Abschnitt 12 sowie zwei axial angesetzte Abschnitte 13 aufweist. An einem der beiden axial angesetzten Abschnitte 13 ist eine Konvertereinheit 1 angeordnet, wie sie im Zusammenhang mit den Figuren 1 bis 3 beschrieben worden ist.

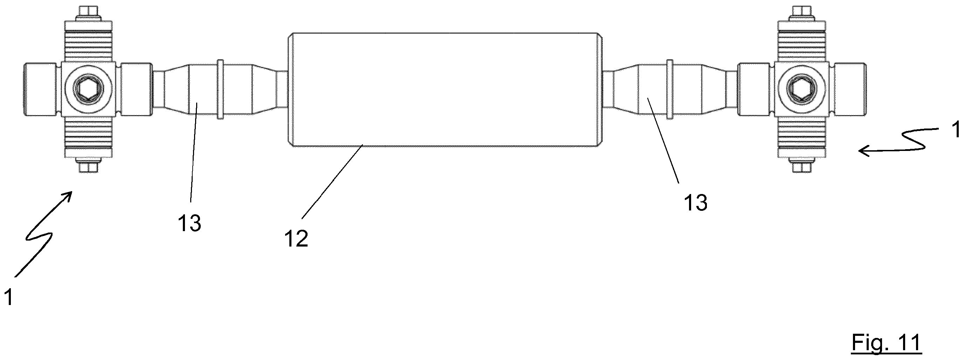

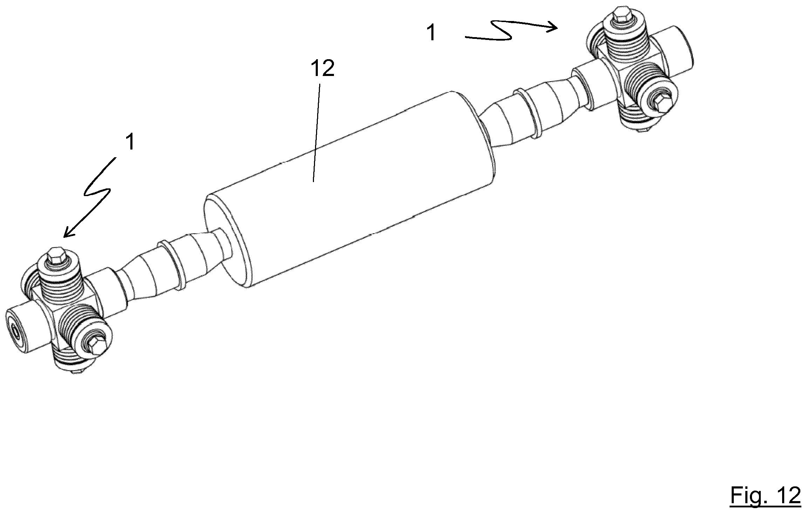

In den Figuren 11 und 12 sind zwei Ansichten einer zweiten erfindungsgemäßen Ausführungsform einer Ultraschallschwingeinheit dargestellt. Diese unterscheidet sich von der in den Figuren 9 und 10 gezeigten Ausführungsform dadurch, dass zwei Konvertereinheiten 1 an axial gegenüberliegenden Enden der Sonotrode an den axialen Verbindungsabschnitten 13 angeordnet sind, wodurch eine Ultraschallanregung mit größerer Energie erzeugt werden kann.

### Bezugszeichenliste

- 1: Konvertereinheit
- 2, 2': Ultraschallübertragungselement
- 3: Arme
- 4: Basisabschnitt
- 5: Gewindebohrungen
- 6: Piezoscheiben
- 7: Endscheibe
- 8: Befestigungsschrauben
- 9: Übertragungsfläche
- 10: Ultraschallwandler
- 11: Ultraschallschwingeinheit
- 12: walzenförmiger Abschnitt der Sonotrode
- 13: axialer Verbindungsabschnitt der Sonotrode
- 14: Anlagefläche
- 15: Gewindebohrung der Anlagefläche
- 16: Befestigungsmutter
- 17: Haltestift
- 18: Außengewinde

## Patentansprüche

1. Konvertereinheit (1) mit einem Ultraschallübertragungselement (2,2'), das eine Übertragungsfläche (9) zum Übertragen einer Ultraschallschwingung auf ein an der Übertragungsfläche befestigbares Werkzeug oder auf ein mit dieser in Kontakt stehendes Material In Längsrichtung entlang einer Längsachse des Ultraschallübertragungselement (2,2') aufweist, und mindestens einem Ultraschallwandler (10) zum Erzeugen einer Ultraschallschwingung mit einer Ausbreitungssrichtung, welche nicht entlang der Längsrichtung ausgerichtet ist, wobei die Konvertereinheit (1) eine Ultraschalleigenfrequenz aufweist, **dadurch gekennzeichnet, dass** der Ultraschallwandler (10) in der Ausbreitungsrichtung in einem Bereich innerhalb von ± λ/4 um die Längsachse des Ultraschallübertragungselement (2,2') angeordnet ist, wobei λ die Wellenlänge der zur Ultraschalleigenfrequenz gehörenden Schwingung ist.

2. Konvertereinheit (1) nach Anspruch 1, **dadurch gekennzeichnet, dass** mindestens zwei Ultraschallwandler (10) vorgesehen sind, die derart angeordnet sind, dass die von den mindestens zwei Ultraschallwandlern (10) erzeugten Ultraschallwellen jeweils eine Ausbreitungsrichtung haben, die nicht parallel zur Längsrichtung ist, wobei vorzugsweise die mindestens zwei Ultraschallwandler (10) jeweils in ihrer Ausbreitungsrichtung in einem Bereich innerhalb von ± λ/4 um die Längsachse des Ultraschallübertragungselementes (2,2') angeordnet sind.

3. Konvertereinheit (1) nach Anspruch 1 oder 2, **dadurch gekennzeichnet, dass** die Ausbreitungsrichtung senkrecht zur Längsrichtung verläuft.

4. Konvertereinheit (1) nach Anspruch 2 oder 3, **dadurch gekennzeichnet, dass** eine gerade Anzahl von Ultraschallwandlern (10) vorgesehen sind, wobei immer zwei Ultraschallwandler (10) symmetrisch zur Längsachse angeordnet sind.

5. Konvertereinheit (1) nach einem der Ansprüche 1 bis 4, **dadurch gekennzeichnet, dass** zumindest ein Ultraschallwandler (10) derart angeordnet ist, dass sich Ausbreitungsrichtung und Längsachse in einem Punkt schneiden, der sowohl für die Längs- als auch für die Querschwingung im Wesentlichen in einem Schwingungsknoten liegt, wobei vorzugsweise alle Ultraschallwandler (10) derart angeordnet sind, dass sich alle deren Ausbreitungsrichtungen und die Längsachse in einem Punkt schneiden, der sowohl für die Längs- als auch für die Querschwingung im Wesentlichen in einem Schwingungsknoten liegt.

6. Konvertereinheit (1) nach einem der Ansprüche 1 bis 5, **dadurch gekennzeichnet, dass** die Einheit in der Ausbreitungsrichtung eine Querausdehnung von λ/2 hat.

7. Konvertereinheit (1) nach einem der Ansprüche 1 bis 6, **dadurch gekennzeichnet, dass** die Konvertereinheit (1) einen im wesentlichen würfelförmigen Basisabschnitt und mindestens einen sich in Längsrichtung erstreckenden Längsarm und vier sich in Querrichtung erstreckende Querarme aufweist, wobei der mindestens eine Längsarm und Querarme am Basisabschnitt befestigt sind, wobei die Querarme jeweils einen Ultraschallwandler (10) aufweisen und vorzugsweise zwei sich in Längsrichtung erstreckende Längsarme vorgesehen sind.

8. Konvertereinheit (1) nach Anspruch 7, **dadurch gekennzeichnet, dass** die Konvertereinheit (1) sowohl in Querrichtung als auch in Längsrichtung eine Länge von kleiner oder gleich λ/2 hat, wobei vorzugsweise die Länge sowohl in Querrichtung als auch in Längsrichtung λ/2 beträgt.

9. Konvertereinheit (1) nach einem der Ansprüche 1 bis 8, **dadurch gekennzeichnet, dass** das Ultraschallübertragungselement (2,2') zumindest einen einstückig angeformten Haltestift (17) aufweist, der durch eine Öffnung des Ultraschallwandlers (10) greift.

10. Ultraschallschwingeinheit (11) mit einer drehbaren Sonotrode, die vorzugsweise als rotierende Walze ausgebildet ist, und einer, gegebenenfalls über ein Amplitudentransformationsstück axial an die Sonotrode angesetzten Konvertereinheit (1) nach einem der Ansprüche 1 bis 9.

11. Ultraschallschwingeinheit (11) nach Anspruch 10, **dadurch gekennzeichnet, dass** zwei Konvertereinheiten (1) nach einem der Ansprüche 1 bis 9 axial angesetzt sind, wobei die beiden Konvertereinheiten (1) vorzugsweise auf gegenüberliegenden Seiten der Sonotrode angesetzt sind.

## Claims

1. A converter unit (1) comprising an ultrasonic transmission element (2, 2') having a transmission surface (9) for transmitting an ultrasonic vibration to a tool which can be fixed to the transmission surface or to a material which is in contact therewith in the longitudinal direction along a longitudinal axis of the ultrasonic transmission element (2, 2'), and at least one ultrasonic transducer (10) for generating an ultrasonic vibration with a propagation direction which is not oriented along the longitudinal direction, wherein the converter unit (1) has an ultrasonic natural frequency, **characterised in that** the ultrasonic transducer (10) is arranged in the propagation direction in a region within ± λ/4 about the longitudinal axis of the ultrasonic transmission element (2, 2'), wherein λ is the wavelength of the vibration belonging to the ultrasonic natural frequency.

2. A converter unit (1) according to claim 1 **characterised in that** there are provided at least two ultrasonic transducers (10) which are so arranged that the ultrasonic waves generated by the at least two ultrasonic transducers (10) respectively have a propagation direction which is not parallel to the longitudinal direction, wherein preferably the at least two ultrasonic transducers (10) are respectively arranged in their propagation direction in a region within ± λ/4 about the longitudinal axis of the ultrasonic transmission element (2, 2').

3. A converter unit (1) according to claim 1 or claim 2 **characterised in that** the propagation direction extends perpendicularly to the longitudinal direction.

4. A converter unit (1) according to claim 2 or claim 3 **characterised in that** there are provided an even number of ultrasonic transducers (10), wherein there are always two ultrasonic transducers (10) arranged symmetrically relative to the longitudinal axis.

5. A converter unit (1) according to one of claims 1 to 4 **characterised in that** at least one ultrasonic transducer (10) is so arranged that the propagation direction and the longitudinal axis intersect at a point which is substantially at a vibration node both for the longitudinal vibration and also for the transverse vibration, wherein preferably all ultrasonic transducers (10) are so arranged that all their propagation directions and the longitudinal axis intersect at a point which is substantially at a vibration node both for the longitudinal direction and also for the transverse direction.

6. A converter unit (1) according to one of claims 1 to 5 **characterised in that** the unit (1) in the propagation direction has a transverse extent of λ/2.

7. A converter unit (1) according to one of claims 1 to 6 **characterised in that** the converter unit (1) has a substantially cube-shaped base portion and at least one longitudinal arm extending in the longitudinal direction and four transverse arms extending in the transverse direction, wherein the at least one longitudinal arm and transverse arms are fixed to the base portion, wherein the transverse arms each have a respective ultrasonic transducer (10) and there are preferably provided two longitudinal arms extending in the longitudinal direction.

8. A converter unit (1) according to claim 7 **characterised in that** the converter unit (1) is of a length of less than or equal to λ/2 both in the transverse direction and also in the longitudinal direction, wherein preferably the length is λ/2 both in the transverse direction and also in the longitudinal direction.

9. A converter unit (1) according to one of claims 1 to 8 **characterised in that** the ultrasonic transmission element (2, 2') has at least one holding pin which is shaped in one piece thereon and which engages through an opening in the ultrasonic transducer (10).

10. An ultrasonic vibration unit (11) having a rotatable sonotrode which is preferably in the form of a rotating roller, and a converter unit (1) 1 which is axially fitted to the sonotrode optionally by way of an amplitude transformation portion, according to one of claims 1 to 9.

11. An ultrasonic vibration unit (11) according to claim 10 **characterised in that** two converter units (1) according to one of claims 1 to 9 are axially fitted, wherein the two converter units (1) are preferably fitted on opposite sides of the sonotrode.

## Revendications

1. Unité de conversion (1) avec un élément de transmission d'ultrasons (2, 2') qui présente une surface de transmission (9) pour la transmission d'une vibration ultrasonore à un outil pouvant être fixé à la surface de transmission ou à un matériau se trouvant en contact avec celle-ci dans la direction longitudinale le long d'un axe longitudinal de l'élément de transmission d'ultrasons (2, 2'), et au moins un transducteur ultrasonore (10) pour la génération d'une vibration ultrasonore avec une direction de propagation qui n'est pas orientée le long de la direction longitudinale, dans laquelle l'unité de conversion (1) présente une fréquence propre ultrasonore, **caractérisée en ce que** le transducteur ultrasonore (10) est agencé dans la direction de propagation dans une plage de ± λ/4 autour de l'axe longitudinal de l'élément de transmission d'ultrasons (2, 2'), dans laquelle λ est la longueur d'onde de la vibration appartenant à la fréquence propre ultrasonore.

2. Unité de conversion (1) selon la revendication 1, **caractérisée en ce qu'**au moins deux transducteurs ultrasonores (10) sont prévus, lesquels sont agencés de telle manière que les ondes ultrasonores générées par les au moins deux transducteurs ultrasonores (10) présentent respectivement une direction de propagation qui n'est pas parallèle à la direction longitudinale, dans laquelle de préférence les au moins deux transducteurs ultrasonores (10) sont agencés respectivement dans leur direction de propagation dans une plage de ± λ/4 autour de l'axe longitudinal de l'élément de transmission d'ultrasons (2, 2').

3. Unité de conversion (1) selon la revendication 1 ou 2, **caractérisée en ce que** la direction de propagation s'étend perpendiculairement à la direction longitudinale.

4. Unité de conversion (1) selon la revendication 2 ou 3, **caractérisée en ce qu'**un nombre pair de transducteurs ultrasonores (10) est prévu, dans laquelle deux transducteurs ultrasonores (10) sont toujours agencés de manière symétrique à l'axe longitudinal.

5. Unité de conversion (1) selon l'une des revendications 1 à 4, **caractérisée en ce qu'**au moins un transducteur ultrasonore (10) est agencé de telle manière que la direction de propagation et l'axe longitudinal se coupent dans un point qui se trouve non seulement pour la vibration longitudinale mais aussi pour la vibration transversale sensiblement dans un nœud de vibration, dans laquelle de préférence tous les transducteurs ultrasonores (10) sont agencés de telle manière que toutes leurs directions de propagation et l'axe longitudinal se coupent dans un point qui se trouve non seulement pour la vibration longitudinale mais aussi pour la vibration transversale sensiblement dans un nœud de vibration.

6. Unité de conversion (1) selon l'une des revendications 1 à 5, **caractérisée en ce que** l'unité dans la direction de propagation présente une extension transversale de λ/2.

7. Unité de conversion (1) selon l'une des revendications 1 à 6, **caractérisée en ce que** l'unité de conversion (1) présente une section de base sensiblement cubique et au moins un bras longitudinal s'étendant dans la direction longitudinale et quatre bras transversaux s'étendant dans la direction transversale, dans laquelle l'au moins un bras longitudinal et des bras transversaux sont fixés à la station de base, dans laquelle les bras transversaux présentent respectivement un transducteur ultrasonore (10) et de préférence deux bras longitudinaux s'étendant dans la direction longitudinale sont prévus.

8. Unité de conversion (1) selon la revendication 7, **caractérisée en ce que** l'unité de conversion (1) présente non seulement dans la direction transversale mas aussi dans la direction longitudinale une longueur inférieure ou égale à λ/2, dans laquelle de préférence la longueur s'élève non seulement dans la direction transversale mais aussi dans la direction longitudinale à λ/2.

9. Unité de conversion (1) selon l'une des revendications 1 à 8, **caractérisée en ce que** l'élément de transmission d'ultrasons (2, 2') présente au moins une tige de retenue (17) formée d'un seul tenant qui traverse une ouverture du transducteur ultrasonore (10).

10. Unité de vibration ultrasonore (11) avec une sonotrode rotative qui est réalisée de préférence comme rouleau rotatif, et une unité de conversion (1) placée éventuellement par le biais d'une pièce de transformation d'amplitude axialement au niveau de la sonotrode selon l'une des revendications 1 à 9.

11. Unité de vibration ultrasonore (11) selon la revendication 10, **caractérisée en ce que** deux unités de conversion (1) selon l'une des revendications 1 à 9 sont placées axialement, dans laquelle les deux unités de conversion (1) sont placées de préférence sur des côtés opposés de la sonotrode.
